# FASCICULE DE BREVET EUROPEEN

(11) **EP 1 534 888 B1**
(45) Date de publication et mention de la délivrance du brevet: **28.04.2010**
(21) Numéro de dépôt: 03760063.2
(22) Date de dépôt: 17.06.2003
(51) Int. Cl.: D06N 3/12, D06M 15/643, C09D 183/04, C08J 3/03

(54) **PROCEDE DE REVETEMENT D'UN TEXTILE ARCHITECTURAL AVEC AU MOINS UNE COUCHE D'ELASTOMERE SILICONE, A PARTIR D'UNE EMULSION SILICONE AQUEUSE ET TEXTILE ARCHITECTURAL AINSI REVETU**
VERFAHREN ZUR BESCHICHTUNG EINES BAUTEXTILS MIT MINDESTENS EINER SCHICHT EINES SILICONELASTOMERS UNTER VERWENDUNG EINER WÄSSRIGEN SILICONEMULSION SOWIE BAUTEXTIL MIT EINER DERARTIGEN BESCHICHTUNG
METHOD FOR COATING AN ARCHITECTURAL TEXTILE WITH AT LEAST ONE LAYER OF A SILICONE ELASTOMER USING AN AQUEOUS SILICONE EMULSION AND AN ARCHITECTURAL TEXTILE WITH SUCH A COATING

(30) Priorité: 18.06.2002 FR 0207491
(43) Date de publication de la demande: 01.06.2005
(73) Titulaire: Tissage et Enduction Serge Ferrari SA, 38110 Saint Jean de Soudain (FR)
(72) Inventeur: MARTIN, Géraldine, F-38110 LA TOUR DU PIN (FR); PERILLON, Jean-Luc, F-26130 SAINT PAUL TROIS CHATEAUX (FR)
(74) Mandataire: Fleurance, Raphaël
(86) Numéro de dépôt international: PCT/FR2003/050012
(87) Numéro de publication internationale: WO 2003/106759

(56) Documents cités:
- EP-A- 0 552 983
- EP-A- 0 764 677
- DE-A- 4 407 031
- FR-A- 2 773 166
- US-A- 5 827 921

## Description

La présente invention a trait à un procédé de revêtement d'un textile architectural avec au moins une couche d'élastomère silicone, obtenue à partir d'une émulsion aqueuse de polyorganosiloxane (POS), applicable et réticulable en couche mince sur le support et aux membranes silicones architecturales ainsi obtenues.

Plus précisément, l'invention concerne la réalisation de membranes silicones architecturales obtenues à partir d'un revêtement par un silicone d'un textile architectural, en particulier mais non limitativement d'un tissu de verre.

Cette réalisation consiste à déposer une composition silicone liquide sur le textile architectural puis à faire en sorte que la couche mince appliquée réticule (durcisse) et se transforme en un élastomère.

Par "textile architectural", on entend un tissu ou non tissé et plus généralement tout support fibreux destiné après revêtement à la confection :
- d'abris, de structures mobiles, de bâtiments textiles, de cloisons, de portes souples, de bâches, de tentes, de stands ou de chapiteaux ;
- de mobiliers, de bardages, d'écrans publicitaires, de brise-vent ou panneaux filtrants ;
- de protections solaires, de plafonds et de stores.

Les revêtements silicones jouent notamment le rôle de liant destinées à améliorer les propriétés mécaniques des textiles architecturaux, notamment la résistance à la déchirure, la résistance à l'effilochage, la souplesse voire l'aptitude au froissement.

Les revêtements silicones peuvent également contribuer à conférer aux textiles architecturaux une certaine imperméabilité et un caractère hydrofuge.

Dans le cas de textiles architecturaux incombustibles tels que les tissus de verre, il importe que ces revêtements silicones ne grèvent pas la résistance à la combustion et plus spécialement le pouvoir calorifique de tels textiles.

Outre la protection des matières textiles contre la chaleur et le feu, les revêtements silicone peuvent également leur procurer une protection contre d'autres agressions et/ou leur conférer des propriétés spécifiques pour certaines applications (propriétés diélectriques par exemple).

Il existe plusieurs problèmes techniques importants en matière de réalisation de revêtements élastomères sur des textiles architecturaux.

Un premier problème est lié à l'opération de dépôt/imprégnation de la composition silicone non réticulée sur le textile. Il importe qu'elle puisse se faire facilement, rapidement (cadence industrielle) et, pour des raisons économiques évidentes, avec des taux de dépôts réduits (par exemple inférieurs à 40 microns).

Un second problème réside dans le niveau d'adhérence minimum que doit avoir le revêtement silicone sur le textile.

Un troisième problème découle de l'ambition d'améliorer les performances du revêtement élastomère silicone sur le plan de ses propriétés mécaniques, de sa fonction de protection, et de ses propriétés hydrofuges et imperméabilisantes, sans que cela ne nuise aux qualités d'incombustibilité de certains textiles architecturaux tels que les tissus de verre.

La prise en compte du premier problème susvisé a conduit les hommes du métier vers des compositions silicones liquides du type émulsions aqueuses de silicone avec ou sans charge. Il reste à savoir si ces émulsions permettent de satisfaire correctement aux deuxième et troisième problèmes sus-évoqués.

La demande de brevet européen EP-A-O 535 649 divulgue un procédé de revêtement de sacs gonflables "airbag" faisant intervenir une émulsion silicone comprenant :
- un polyorganosiloxane (A) du type POS e.g: PDMS α, ω-diméthylhydroxysiloxy, en émulsion dans l'eau en présence d'un émulsifiant anionique,
- un promoteur d'adhérence (B), qui est choisi dans le groupe comprenant : le produit de réaction entre, d'une part, un silane amino-fonctionnel ou un hydrolysat de celui-ci, et d'autre part, un anhydride d'acide, un silane époxy-fonctionnel ou un hydrolysat de celui-ci et/ou un organosilane ayant un radical isocyanate et un radical hydrolysable ou un hydrolysat de celui-ci, (cf. exemple 3-amino-propyltriéthoxysilane + anhydride maléique),
- une silice colloïdale (C),
- et un catalyseur (D).

L'émulsion utilisée dans ce procédé souffre des inconvénients suivants : compromis insuffisant en terme d'adhérence, de réactivité et de stabilité des émulsions, en particulier adhérence insuffisante du silicone sur le support, incompatibilité des silanes et du tensioactif utilisés avec les systèmes de polyaddition à base d'huiles à □SiH et de catalyseur au Platine.

De même, la demande de brevet européen EP-A-O 552 983 décrit un procédé de revêtement avec une émulsion du même type, obtenue à partir (A) d'un organopolysiloxane ayant au moins deux groupes alcényle [poly(diméthyl)(vinylméthyl)siloxane alpha,oméga-diméthylvinylsiloxy], (B) d'un organohydrogénopolysiloxane [poly-(méthylhydrogéno)siloxane alpha,oméga-triméthylsiloxy] ayant au moins trois atomes d'hydrogène et (C)un catalyseur de réticulation au platine, (D) un inhibiteur de réticulation du type éthynylcyclohexanol, (E) un promoteur d'adhérence du type trialcoxysilane époxydé ou silane aminofonctionnel (p.4, ligne 34), et (F) éventuellement une charge renforçante telle qu'une silice colloïdale par émulsification dans l'eau en présence d'un émulsifiant (dodécylbenzène-sulfonate et d'alcool polyvinylique APV).
L'émulsion utilisée dans ce procédé d'enduction souffre des inconvénients suivants : compromis adhérence (sur le support) / stabilité (de l'émulsion) insuffisant, en particulier l'utilisation du dodécylbenzene sulfonate et de silane aminofonctionnel non salifié conduit à une stabilité limitée des émulsions de polyaddition.

Le brevet européen EP-B-O 758 666 concerne l'enduction de supports souples à l'aide d'une émulsion aqueuse comprenant :
1- des POS de type polydiméthylsiloxane (PDMS) vinylés en bout de chaîne (vinyldiméthylsiloxy) ;
2- des POS hydrogénés de type poly(méthylhydrogéno)(diméthyl)-siloxane α,ω-triméthylsiloxy ;
3- un catalyseur au platine du type platine de Karstedt ;
4- un promoteur d'adhérence produit par la réaction entre un vinyle triacétoxysilane et un triméthoxysilane fonctionnalisé par un radical glycidyle ;
5- un inhibiteur de réticulation du type éthynylcyclohexanol ;
6- une résine silicone de type MT avec M = (Me₃SiO_{1/2}) et T = (MeSiO_{3/2}) ;
7- un émulsifiant du type dodécylbenzène sulfonate de sodium.

Cette émulsion silicone polyaddition trouve une application privilégiée pour la réalisation de revêtements d'enduction textile ("airbag" : support en polyamide).

La demande de brevet européen EP-A-1 010 721 divulgue la même émulsion que celle décrite dans l'EP-B-0 758 666, avec un additif supplémentaire constitué par du noir de carbone.

La demande de brevet FR-A-2 738 830 concerne l'enduction de matière textile à l'aide d'une émulsion aqueuse de polyorganosiloxanes. Cette émulsion est obtenue par mélange d'une préémulsion A et d'une préémulsion B.

La préémulsion A comprend :
- 1- de l'huile POS de type PDMS α,ω-diméthylvinylsiloxy ;
- 2- d'une huile POS hydrogénée du type PDMS α,ω-diméthylhydrogénosiloxy ;
- 3- une huile à silicone POS hydrogénée du type poly(diméthyl)(méthylhydrogéno)siloxane ;
- 4- un promoteur d'adhérence du type vinyltriméthoxysilane, 3-glycidoxypropyltriméthoxysilane (GLYMO), 4-époxycyclohexyl-éthyltriméthoxysilane, chélates de type orthotitanate de butyle, ou enfin s'agissant des compositions silicones réticulables par polyaddition, des silanes aminés de type triméthoxy ou triéthoxysilane amino-fonctionnel) ;
- 5- un inhibiteur de réticulation du type éthynylcyclohexanol ;
- 6- et charges = silice colloïdale hydrophobée dans de l'huile silicone.

La préémulsion B comprend :
- 1'- de l'huile POS α,ω-divinylée identique à celle de l'émulsion A;
- 4'- un promoteur d'adhésion du type titanate de butyle ;
- 7- un catalyseur au platine ;
- 6'- de la charge colloïdale du même type que dans l'émulsion A.

Les préémulsions A et B sont respectivement préparées par agitation des compositions sus-décrites en présence d'eau et d'alcool polyvinylique (APV 25/140 Rhodoviol^{®}). Une fois obtenues séparément, les préémulsions A et B sont mélangées l'une à l'autre.

Le procédé de préparation de cette émulsion aqueuse silicone n'est pas optimisé. On peut relever les inconvénients suivants : émulsion très grossière, procédé peu souple et onéreux car il faut réaliser des mélanges silicones intermédiaires, difficulté de préparer des émulsions très concentrées.

Dans cet état de la technique, l'un des objectifs essentiels de la présente invention est de fournir un procédé d'enduction d'un textile architectural, à l'aide d'une émulsion silicone réticulable par polyaddition et dotée de propriétés rhéologiques telles qu'elle puisse être aisément déposée/appliquée sur le textile architectural, à grande vitesse, et selon des taux de dépôt limités, par exemple inférieurs à 40 g/m².

Un autre objectif essentiel de l'invention est de fournir un procédé pour former des revêtements fins (couches minces) de protection de textiles architecturaux, ces revêtements élastomères silicone ayant d'excellentes qualités mécaniques (cohésion, souplesse), et conférant au textile architectural une bonne résistance à l'effilochage et à la déchirure ainsi qu'une bonne aptitude au froissement.

Un autre objectif essentiel de l'invention est de fournir un procédé pour former des revêtements fins (couches minces) de protection de textiles architecturaux, dans lequel le dépôt est aisé, les quantités d'émulsion mises en oeuvre sont limitées et qui conduit à des supports enduits silicone dotés de bonnes qualités d'incombustibilité exprimées par exemple par un pouvoir calorifique supérieur mesuré selon NFP 92510 inférieur à 4200 kJ/kg et de préférence inférieur à 2500 kJ/kg .

Un autre objectif essentiel de l'invention est de fournir un procédé pour former sur des textiles architecturaux inorganiques ou polymère peu propices à l'adhérence, des revêtements silicones adhérant sur les fibres et leur conférant des propriétés anti-adhérentes, hydrofuges, imperméables et répondant aux spécifications de dépôt aisé et en quantité limitée et de coût réduit.

Un autre objectif essentiel de l'invention est de fournir un procédé d'enduction silicone sur des textiles architecturaux, pour former des revêtements élastomères protecteurs, imperméables, éventuellement incombustibles, souples, résistants, à l'aide d'une émulsion de composition telle que, pour des textiles architecturaux, le film élastomère soit un bon liant apte à donner de la tenue, de la cohésion et de la souplesse aux textiles enduits, tout en limitant au maximum le phénomène de marquage à la pliure.

Un autre objectif essentiel de l'invention est de fournir un procédé d'enduction silicone dans lequel est mise en oeuvre une émulsion stable, chimiquement (conservation des ≡SiH et de la réactivité) et physiquement (crémage et coalescence limités lors du stockage de l'émulsion), et présentant de bonnes caractéristiques en terme de réactivité (réticulation par polyaddition) et d'adhérence sur le support , par séchage du textile traité.

Un autre objectif essentiel de l'invention est de fournir un procédé d'enduction d'un textile architectural, à l'aide d'une émulsion silicone aqueuse réticulable par polyaddition et possédant les spécifications énoncées ci-dessus, ce procédé se devant d'être simple, économique, industriel, tout en permettant de produire des textiles architecturaux enduits, souples, non sujets au marquage à la pliure, résistants à la déchirure, à l'effilochage et éventuellement dotés d'un caractère incombustible exprimé par exemple par un Pouvoir Calorifique Supérieur (PCS) mesuré selon NFP 92510 inférieur à 4200 kJ/kg et de préférence inférieur à 2500 kJ/kg .

Un autre objectif essentiel de l'invention est de fournir des textiles architecturaux revêtus d'un film mince en élastomère silicone résultant de l'enduction et de la réticulation par polyaddition d'une émulsion silicone aqueuse, selon un procédé du type de celui défini dans les objectifs supra , ces textiles architecturaux revêtus étant destinés à la réalisation de membranes pour l'architecture textile intérieure et extérieure et la protection solaire.

Ces objectifs, parmi d'autres, sont atteints par la présente invention qui concerne tout d'abord un procédé de réalisation de membranes silicones architecturales par revêtement d'un textile architectural avec au moins une couche d'élastomère silicone, caractérisé en ce qu'il comprend les étapes suivantes :
- une étape de dépôt sur ledit textile architectural ; d'au moins une couche d'une émulsion aqueuse de polyorganosiloxane (POS) réticulable en élastomère par des réactions de polyaddition et comprenant:
   (A) au moins un POS présentant par molécule au moins deux groupements fonctionnels insaturés de type alcényle en C₂-C₆, liés au silicium,
   (B) au moins un POS présentant par molécule au moins trois atomes d'hydrogène liés au silicium,
   (C) au moins un promoteur d'adhérence spécial choisi dans le groupe de composés comprenant les hydrocolloïdes protecteurs, les silanes et/ou les POS hydroxylés porteurs par molécule d'au moins un groupement hydroxyle et d'au moins une fonction aminée et salifiée, et leurs mélanges,
      avec la condition selon laquelle le pourcentage en poids du promoteur d'adhérence (C) par rapport à la phase silicone est strictement situé dans l'intervalle allant de 0,005 à 10 %, de préférence de 0,03 à 5 % et plus préférentiellement encore de 0,05 à 4 %,
   (D) au moins un catalyseur,
   (E) au moins un tensioactif,
   (F) éventuellement au moins une résine POS comportant au moins deux groupements alcényles,
   (G) au moins un inhibiteur de réticulation,
   (H) éventuellement au moins un agent de fixation du pH,
   (I) éventuellement au moins un additif de formulation,
   (J) éventuellement une charge,
   (K) et de l'eau,
- puis une étape de réticulation, de manière à obtenir un textile architectural revêtu d'une couche d'élastomère, de telle sorte que le rapport du poids de l'enduction exprimée en sec au poids du textile architectural soit inférieur à 0,2 et de préférence compris entre 0,05 et 0,11.

De préférence, le rapport *quantité pondérale de promoteur d'adhérence (C)* / *surface développée par le textile,* se situe dans l'intervalle allant de 0,1 à 10 mg/m², de préférence de 0,2 à 5 mg/m².

Par *"surface développée par le textile",* on entend conformément à l'invention la surface développée par les fibres constituant le textile architectural et qui seront recouvertes par l'émulsion.

L'étape de dépôt est avantageusement une enduction.

L'étape d'enduction peut notamment être réalisée par racle, en particulier par racle sur cylindre, racle en l'air et racle sur tapis, par foulardage, notamment par exprimage entre deux rouleaux ou encore par rouleau lécheur, cadre rotatif, rouleau inverse "reverse roll", par transfert, par sérigraphie, par héliographie, ou par pulvérisation.

On peut enduire l'une ou les deux faces de la matière textile, l'enduction des deux faces étant alors avantageusement réalisée par foulardage après imprégnation du tissu avec l'émulsion. Après passage entre les rouleaux, le textile est enduit uniformément d'une couche fine d'émulsion. On procède ensuite au séchage et à la réticulation, de préférence par air chaud ou infra-rouges, notamment, de 30 s à 5 min, à une température de réticulation sans dépasser la température de dégradation du substrat.

Lorsque l'enduction est effectuée sur une seule face, on utilise préférablement une racle. L'émulsion est déposée en continu sur la face supérieure du textile, puis passe sous la racle, avant séchage et réticulation comme ci-dessus.

De préférence, l'enduction est réalisée :
◆ par immersion du textile architectural dans un bain d'émulsion telle que définie supra,
◆ par essorage, de préférence par pression entre des rouleaux,
◆ puis par réticulation, de préférence sous activation thermique lorsque la réticulation s'effectue selon un mécanisme de polyaddition.

La couche d'élastomère est de préférence comprise entre 5 et 200 g/m². En cas d'émulsion à deux composants, le procédé comprend une étape préalable consistant dans le mélange des deux composants.

Avantageusement, le textile architectural est un tissu, un non-tissé, un tricot ou plus généralement tout support fibreux comprenant des fibres et/ou des fibres choisis dans le groupe de matériaux comprenant : le verre, la silice, les métaux, la céramique, le carbure de silicium, le carbone, le bore, les fibres naturelles comme le coton, la laine, le chanvre, le lin, les fibres artificielles comme la viscose, ou des fibres cellulosiques, les fibres synthétiques comme les polyesters, les polyamides, les polyacryliques, les chlorofibres, les polyoléfines, les caoutchoucs synthétiques, l'alcool polyvinylique, les aramides, les fluorofibres, les phénoliques ...

De manière remarquable, le textile architectural lorsqu'il est choisi parmi les matériaux inorganiques tels que le verre, la silice, les métaux, la céramique, le carbure de silicium, le carbone, le bore, possède, une fois revêtu, un Pouvoir Calorifique Supérieur (PCS) qui est inférieur ou égal à 4200 kJ/kg, de préférence inférieur ou égal à 2500 kJ/kg.

Avantageusement, les textiles architecturaux enduits présentent un poids total inférieur à 1200 g/m² et de préférence compris entre 100 et 500 g/m² et permettent de réaliser des membranes composites présentant de bonnes propriétés d'incombustibilité pour l'architecture intérieure et extérieure ou la protection solaire.

L'émulsion silicone aqueuse mise en oeuvre dans le procédé selon l'invention est du type de celle réticulable par polyaddition à température ambiante (EVF ou RTV), sachant que cette réticulation catalysée par le platine peut être activée thermiquement (100-200°C).

L'émulsion aqueuse silicone du procédé selon l'invention est adhérente sur de nombreux textiles architecturaux, par exemple en fibres de verre, éventuellement en fibres textiles synthétiques, du type polyester ou polyamide.

S'agissant des textiles architecturaux du type inorganique, le procédé utilisant l'émulsion supra permet d'obtenir des tissus de verre enduits d'élastomères silicones en couches minces, hydrofuges ayant de bonnes propriétés mécaniques de souplesse, de résistance à la déchirure et à l'effilochage et dotés d'un faible pouvoir calorifique (par exemple PCS ≤ 2500 KJ).

L'un des constituants essentiels de l'émulsion mise en oeuvre dans le procédé selon l'invention est le promoteur d'adhérence (C) spécial, judicieusement sélectionné pour que l'adhérence soit apportée :
- par au moins un hydrocolloïde protecteur, de préférence l'APV, lequel peut également jouer le rôle de tensioactif (E) en combinaison ou non avec d'autres émulsifiants,
- ou par des silanes et/ou des POS spécifiques, judicieusement sélectionnés, à savoir les silanes et/ou les POS hydroxylés et amino-salifiés,
- ou bien encore par un hydrocolloïde protecteur, de préférence de l'APV, et par des silanes et/ou des POS hydroxylés et amino-salifiés.

Selon un premier mode de mise en oeuvre de l'invention, l'hydrocolloïde protecteur, de préférence l'APV, est exclusivement dédié à la fonction de promoteur d'adhérence (C).

Conformément à un second mode de mise en oeuvre de l'invention, le tensioactif (E) peut être au moins en partie constitué par au moins un hydrocolloïde protecteur, de préférence un APV.

Dans le premier mode de mise en oeuvre, l'hydrocolloïde protecteur, de préférence l'APV, est présent en quantité réduite dans l'émulsion de sorte qu'il ne peut exercer pleinement que sa fonction de promoteur d'adhérence (C) et imparfaitement sa fonction d'émulsifiant. Il en résulte que l'émulsion doit comprendre un émulsifiant ou tensioactif (E) principal.
Dans le second mode de mise en oeuvre de l'invention, l'hydrocolloïde protecteur, de préférence l'APV, promoteur d'adhérence et émulsifiant, est présent à raison de 1,5 à 7 % d'APV sec par rapport à la masse totale d'huiles silicones.

Sur le plan qualitatif, on peut indiquer que l'hydrocolloïde protecteur est de préférence un alcool polyvinylique (APV) ou un mélange d'APV et, préférentiellement les grades d'APV qui en solution aqueuse (à 4 % et à 20°C) ont une viscosité dynamique type (ηdt) comprise entre 5 et 40 mPa.s, de préférence entre 10 et 30 mPa.s, et un indice d'ester supérieur ou égal à 80, de préférence à 100 et notamment compris entre 120 et 200.

De préférence, l'APV est mis en oeuvre sous forme de solution aqueuse de viscosité dynamique type (ηdt) comprise entre 5 et 40 mPa.s, de préférence entre 10 et 30 mPa.s, et dont l'indice d'ester est supérieur ou égal à 80, de préférence à 100 et notamment compris entre 120 et 200.

Les alcools polyvinyliques (APV) sont des composés obtenus indirectement à partir de leurs esters, par hydrolyse en milieu aqueux ou par alcoolyse en milieu anhydre. En pratique, les esters utilisés comme matière première sont couramment les acétates de polyvinyles. Généralement, la lyse des esters conduisant aux APV n'est pas complète. Il reste dans la molécule des radicaux acyles dont la proportion influe sur les propriétés de l'APV, notamment sur sa solubilité. Un mode de définition des APV repose donc sur l'indication de l'indice d'ester (I.E) qui est inversement proportionnel au taux d'hydrolyse. La mesure de l'I.E. s'effectue de manière connue en soi, par neutralisation de l'acidité éventuelle de l'alcool polyvinylique, saponification des groupes acyles et titrage de l'excès d'alcalinité.

Les alcools polyvinyliques selon l'invention sont également caractérisés parleur degré de condensation que l'on peut évaluer par la détermination de la viscosité dynamique d'une solution type (désignée par ηdt dans le présent exposé), sachant que cette variable est d'autant plus élevée que le degré de condensation est plus grand.

La viscosité ηdt correspond au coefficient de viscosité dynamique d'une solution aqueuse d'APV à 4% poids, mesuré à une température de 20 ± 5°C à l'aide d'un viscosimètre d'Ostwald.

Comme autre hydrocolloïde protecteur, on peut également citer des polyesters sulfonés hydrosdispersables, notamment de type polyéthylène téréphtalate sulfoné.

Les polyesters sulfonés hydrodispersables sont des produits connus et disponibles dans le commerce. Ils peuvent être préparés par co-condensation d'un diacide organique (tel qu'un diacide aliphatique saturé ou insaturé, un diacide aromatique, un diacide présentant plusieurs noyaux aromatiques, un diacide arylaliphatique), l'un de des diesters ou son anhydride et d'un diacide organique sulfoné ou l'un de ses diesters avec un diol, en présence d'un catalyseur habituel de polyestérification tel que l'orthotitanate de tétraisopropyle.

Comme monomères de départ couramment utilisés pour la préparation des polyesters sulfonés, hydrodispersables, on peut citer en tant que:
- diacides organiques : les diacides aliphatiques saturés ou insaturés, les diacides aromatiques, tels que les acides succinique, adipique, subérique, sébacique, les acides maléique, fumarique, itaconique, les acides orthophtalique, isophtalique, téréphtalique, les anhydrides de ces acides et leurs diesters comme les diesters méthyliques, éthyliques, propyliques, butyliques. Les composés préférés sont l'acide adipique, les acides orthophtalique, isophtalique, téréphtalique ;
- diacides organiques sulfonés : les diacides sulfonates de sodium ou leurs diesters tels que les dialcoylisophtalates et dialcoylsulfosuccinates comme le diméthylisophtalate-5 sulfonate de sodium ou 1 e diméthylsulfosuccinate de sodium ;
- diols : les glycols aliphatiques tels que l'éthylèneglycol, le diéthylèneglycol, le dipropylèneglycol et les homologues supérieurs, le butane-1,4 diol, l'hexane-1,6 diol, le néopentylglycol et les glycols cyclaniques tels que le cyclohexanediol, le dicyclohexane-diolpropane. Les diols choisis préférentiellement sont l'éthylèneglycol et le diéthylèneglycol.

Les polyesters sulfonés hydrodispersables préférés sont ceux qui ont une masse moléculaire moyenne en nombre comprise entre 10.000 et 35.000, un indice d'acide inférieur à 5 mg de KOH/g, un taux de soufre compris entre 0, 8 et 2 % poids, de préférence entre 1, 2 et 1, 8 %. Comme polyesters de ce type, on peut utiliser notamment les produits commercialisés par RHO'DIA sous la marque GEROL PS20.

Les silanes hydroxylés et aminosalifiés qui peuvent être des éléments constitutifs du promoteur (C) sont obtenus à partir de précurseurs non salifiés, parmi lesquels on peut citer comme exemples les monoamine-trihydroxy-monosilanes, tels que le : NH₂(CH₂)₃-Si(OH)₃, éventuellement oligomérisé par condensation partielle des SiOH.

Ceci étant précisé, le promoteur d'adhérence hydrosoluble (C) comprend, de préférence, des POS hydroxylés, aminés et salifiés.

Ces POS aminés et salifiés constituant le promoteur (C) sont les POS aminés et salifiés constituant le promoteur (C) sont avantageusement formés de plusieurs unités récurrentes de formule moyenne (1) suivante: 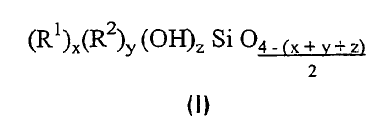 dans laquelle :
■ R¹ représente un groupement monovalent exempt d'azote, de nature identique ou différente d'une unité récurrente à l'autre, et correspondant à un alkyle en C₁-C₆, un aryle, un alcényle en C₂-C₈, ou un acrylate, chacun de ces groupements étant éventuellement substitué,
■ R² étant de nature identique ou différente d'une unité récurrente à l'autre et répondant à la formule suivante :

   - R⁴ - N⁽⁺⁾ R⁵R⁶ , X⁽⁻⁾

   * R⁴ étant un radical hydrocarboné en C₁-C₁₀, éventuellement substitué,
   * les groupements R⁵, R⁶ sont identiques ou différents et représentent l'hydrogène ou un radical hydrocarboné en C₁-C₁₀,éventuellement substitué, ou -R⁴-NH₃⁽⁺⁾,X⁽⁻⁾,
   * ou bien encore les groupements R⁵ et R⁶ sont différents de l'hydrogène et forment ensemble un cycle à 5-7 chaînons renfermant au moins un hétéroatome, de préférence l'azote ou l'oxygène,
   * et X représentant un contre-anion choisi parmi les carboxylates, les halogénures et ;
■ x, y et z sont des nombres entiers ou décimaux positifs inférieurs à 4 ;
■ et x+y+z <4.

De préférence, le POS aminé et salifié est une résine présentant une fonctionnalité moyenne en silicium supérieure à 2, correspondant à x+y<2 :
- x étant de préférence < 2 et plus préférentiellement encore 0,1 ≦ x ≦ 1 ;
- y étant de préférence < 1,2 et plus préférentiellement encore 0,1 ≦ x ≦ 1,1.

Cela correspond à une résine POS :
- d'une part, hydroxylée et comprenant des motifs siloxyles T et éventuellement M et/ou D et/ou Q ou bien encore des motifs siloxyles Q et M et/ou D et/ou T;
- d'autre part, portant au moins un motif aminé et salifié.

Les motifs siloxyles M, D, T, Q du POS (C) sont définis comme suit :
- motif M = R₃ SiO_{1/2}
- motif D = R₂ SiO_{2/2}
- motif T = RSiO_{3/2}
- motif Q = SiO_{4/2}

Les radicaux R sont identiques ou différents et correspondent :
o à un radical R¹ tel que défini ci-dessus (comme par exemple un radical alkyle (e.g. méthyle, éthyle, isopropyle, tertiobutyle et n-hexyle), un hydroxyle, alcényle (e.g. vinyle, allyle)
o ou bien encore un motif R² aminosalifiable ou salifié, tel que défini ci-dessus.

A titre d'exemple de résine POS hydroxylée linéaire, utilisable comme promoteur (C), on peut citer le PolyMéthylSiloxane, dont les deux extrémités comportent un hydroxyle et dont chaque atome de silicium est porteur d' un motif aminosalifiable ou salifié.

Les résines plus particulièrement sélectionnées sont celles du type T(OH), DT(OH), DQ(OH), DT(OH), MQ(OH), MDT(OH) MDQ(OH) ou les mélanges de celles-ci. Dans ces résines, chaque groupement OH est porté par un atome de silicium appartenant à un motif D, T ou Q.

Ces résines sont des produits de condensation (mono ou polycondensation-hétéro ou homo condensation) de monomères, d'oligomères ou de polymères POS porteurs de groupements condensables, de préférence de nature hydroxylique.

Outre ces hydroxyles, le promoteur (C) comporte un ou plusieurs motifs aminosalifiables ou salifiés identiques ou différents entre eux.

Dans ces motifs, l'amine peut être primaire, secondaire ou tertiaire. Selon des variantes, elle peut être incluse dans un cycle ou être incluse dans des groupements isocyanurates ou HALS (type pipéridine ou autre).

Au sens de l'invention, les groupements HALS peuvent être définis comme une chaîne hydrocarbonée cyclique (HALS) de formule : 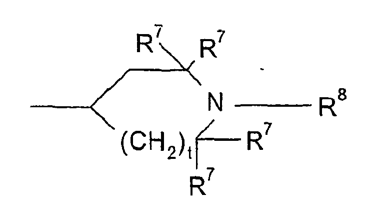 dans laquelle :
- les radicaux R⁷, identiques ou différents entre eux, sont choisis parmi les radicaux alkyles, linéaires ou ramifiés, ayant de 1 à 3 atomes de carbone, phényle et benzyle ;
- R⁸ est choisi parmi un atome d'hydrogène, les radicaux alkyles linéaires ou ramifiés, ayant de 1 à 12 atomes de carbone, les radicaux allkylcarbonyles, où le reste alkyle est un reste linéaire ou ramifié ayant de 1 à 18 atomes de carbone, les radicaux phényle et benzyle et un radical O ;
- t est un nombre choisi parmi 0 et 1 ;
- de préférence les radicaux R⁷ sont des méthyles, le radical R⁸ est un nombre d'hydrogène ou un radical méthyle et t étant avantageusement un nombre égal à 1.

Les motifs aminosalifiables ou salifiés sont avantageusement choisis de telle sorte qu'ils soient aptes à se lier avec le support textile sur lequel l'émulsion est appliqué, de manière à procurer de l'adhérence, et ce sans mettre à mal l'hydrosolubilité souhaitable pour le promoteur (C).

Pour plus de détails sur ces promoteurs (C) de type résine silicone hydrosoluble, aminosalifiable ou salifiée et hydroxylée, et sur leur obtention, on se référera au brevet FR-B-2 753 708 ou à la demande de brevet européen EP-A-Q 675 128, dont les contenus sont intégrés par référence dans le présent exposé.

A titre d'exemples précis de motifs aminosalifiables, on peut citer notamment :
- aminopropyle : (H₂N)(CH₂)-₃
- N-méthyl-3-aminopropyle : (H₃CNH)(CH₂)-₃
- N-aminoéthyl-3-aminopropyle : (H₂N)(CH₂)₂NH(CH₂)-₃
- C₆H₅CH₂NH(CH₂)₂ (NH)(CH2)-3
- 3-uréidopropyle : (H₂N CO NH)(CH₂)-₃
- 3-4,5-dihydroimidazole-1-yl-propyle : 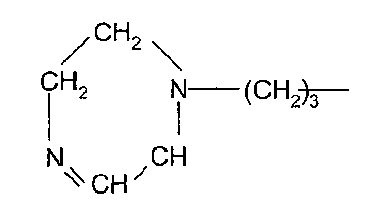 de manière optionnelle, le promoteur comportant des motifs aminosalifiables peut aussi porter des fonctions non aminées, telles que les suivantes :
   - 3-méthacryloxypropyl : (H₂C = C)(CH₃) (COO)(CH₂)₃-
   - 3-glycidyloxypropyl : 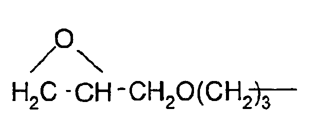
   - 3-mercaptopropyl : (HS)(CH₂)-₃
   - 3-chloropropyle : (Cl)(CH₂)-₃
   - Vinyle : CH₂=CH-
ces motifs pouvant être incorporés par des techniques connues par l'homme de métier, notamment par co-hydrolyse/co-condensation d'un alcoxysilane aminé avec un alcoxysilane non aminé portant les motifs décrits ci-dessus.

On peut aussi ajouter les alcoxysilanes portant ces motifs non aminés dans l'émulsion contenant le silane aminé salifié.

L'une des caractéristiques essentielles du promoteur (C) sélectionné conformément à l'invention, est d'être salifié au travers des motifs aminés qui sont tels que décrits ci-dessus et qui comprennent au moins un ≡N ⁺, X⁻ , avec X représentant un contre-anion choisi parmi les carboxylates, les halogénures, de préférence un lactate, un acétate ou un chlorure.

Pour que le promoteur (C) soit salifié, il convient de faire en sorte que la phase continue aqueuse de la dispersion ait un pH tel que ce promoteur (C) (de préférence une résine POS hydroxylée) se maintienne sous forme ionisée. Le choix du pH s'effectue, de manière connue en soi, selon le pKa de l'acide qui correspond au contre-anion mis en oeuvre.

Le promoteur (C) préféré sous forme de résine hydroxylée est inclus dans la phase continue aqueuse de la dispersion. Il y est solubilisé ou finement dispersé.

Selon une variante, il est envisageable qu'une partie seulement du promoteur (C) soit sous forme salifié, le reste étant non salifié.

Les mélanges de promoteurs (C) de différentes natures sont également couverts par l'invention.

La phase silicone de l'émulsion mise en oeuvre dans le procédé selon l'invention comprend des POS destinés à générer l'élastomère par réticulation/durcissement à température ambiante (23°C) selon un mécanisme de polyaddition. Il est possible d'accélérer la réticulation par activation thermique à une température supérieure à l'ambiante. Les élastomères dit vulcanisables à froid de polyaddition et les élastomères vulcanisables à chaud de polyaddition entrent dans le cadre de l'invention.

Ces polyorganosiloxanes, constituants principaux des compositions selon l'invention, peuvent être linéaires, ramifiés ou réticulés, et comporter des radicaux hydrocarbonés et/ou des groupements réactifs comme par exemple des groupes hydroxyles, des groupements hydrolysables, des groupements alcényles, des atomes d'hydrogène, etc. A noter que les compositions organopolysiloxanes sont amplement décrites dans la littérature et notamment dans l'ouvrage de Walter NOLL "Chemistry and Technology of Silicones", Academic Press, 1968, 2ème édition, pages 386 à 409.

Plus précisément les POS, constituants principaux des compositions selon l'invention, sont constitués de motifs siloxyles de formule générale : 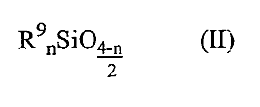 et/ou de motifs siloxyles de formules :

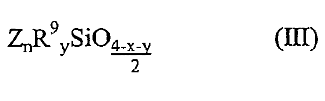

Dans ces formules, les divers symboles ont la signification suivante :
- les symboles R⁹, identiques ou différents, représentent chacun un groupement de nature hydrocarbonée non hydrolysable, ce radical pouvant être:
   * un radical alkyle, halogènoalkyle ayant de 1 à 5 atomes de carbone et comportant de 1 à 6 atomes de chlore et/ou de fluor,
   * des radicaux cycloalkyles et halogènocycloalkyles ayant e 3 à 8 atomes de carbone et contenant de 1 à 4 atomes de chlore et/ou de fluor,
   * des radicaux aryles, alkylaryles et halogènoaryles ayant de 6 à 8 atomes de carbone et contenant de 1 à 4 atomes de chlore et/ou de fluor,
   * des radicaux cyanoalkyles ayant de 3 à 4 atomes de carbone ;
- les symboles Z, identiques ou différents, représentent chacun un atome d'hydrogène, un groupement alcényle ;
   - n = un nombre entier égal à 0, 1, 2 ou 3 ;
   - x = un nombre entier égal à 0, 1, 2 ou 3 ;
   - y = un nombre entier égal à 0, 1 ou 2 ;
- la somme x + y est comprise entre 1 et 3.

A titre illustratif, on peut citer les radicaux organiques R⁹, directement liés aux atomes de silicium : les groupes méthyle ; éthyle ; propyle ; isopropyle ; butyle ; isobutyle ; n-pentyle ; t-butyle chlorométhyle ; dichlorométhyle ; a-chloroéthyle, α,β-dichloroéthyle ; fluorométhyle ; difluorométhyle α,β-difluoroéthyle ; trifluoro-3,3,3 propyle trifluoro cyclopropyle ; trifluoro-4,4,4 butyle ; hexafluoro-3,3,4,4,5,5 pentyle ; β-cyanoéthyle ; β-cyanopropyle ; phényle ; p-chlorophénylem- ; chlorophényle ; dichloro-3,5 phényle ; trichlorophényletétrachlorophényle o-, p-, ou m-tolyle ; α-α-α-trifluorotolyle ; xylyles comme radicaux-2,3 phényle,radicaux-3,4 phényle.

Préférentiellement, les radicaux organiques R⁹ liés aux atomes de silicium sont des radicaux méthyle, phényle, ces radicaux pouvant être éventuellement halogénés ou bien encore des radicaux cyanoalkyle.

Les symboles Z peuvent être des atomes d'hydrogène ou des groupements vinyles.

Il est possible d'utiliser une grande variété de compositions organopolysiloxanes bicomposantes ou monocomposantes réticulant à température ambiante ou à la chaleur par des réactions de polyaddition, essentiellement par réaction de groupements hydrogénosilylés sur des groupements alcénylsilylés, en présence généralement d'un catalyseur métallique, de préférence au platine, sont décrites par exemple dans les brevets US-A-3 220 972, 3 284 406, 3 436 366, 3 697 473 et 4 340 709. Les organopolysiloxanes entrant dans ces compositions sont en général constitués par des couples à base d'une part d'au moins un polysiloxane linéaire, ramifié ou réticulé constitué de motifs (III) dans lesquels le reste Z représente un groupement alcényle et où x est au moins égal à 1, éventuellement associés à des motifs (II), et d'autre part d'au moins un hydrogéno-polysiloxane linéaire, ramifié ou réticulé constitué de motifs (III) dans lesquels le reste Z représente alors un atome d'hydrogène et où x est au moins égal à 1, éventuellement associés à des motifs (II). En ce qui concerne le constituant polysiloxane insaturé à motifs (III), il peut s'agir d'une huile de viscosité dynamique à 25°C comprise entre 200 et 500 000 mPa.s. On peut utiliser au besoin à titre de ce constituant un mélange à base de l'huile précitée avec une gomme insaturée de viscosité supérieure à 500 000 mPa.s, pouvant aller jusqu'à 10⁶ mPa.s.

De manière préférée, les émulsions utilisées dans le cadre de l'invention comportent en outre, lorsqu'il s'agit de compositions de polyaddition, au moins une résine silicone (F) non hydroxylée. Ces résines silicones sont des polymères POS ramifiés bien connus et disponibles dans le commerce. Elles présentent, par molécule, au moins deux motifs différents choisis parmi ceux de formule R¹⁰₃SiO_{1/2} (motif M), R¹⁰₂SiO_{2/2} (motif D), R¹⁰SiO₃/2 (motif T) et SiO_{4/2} (motif Q).

Les radicaux R¹⁰ sont identiques ou différents et sont choisis parmi les radicaux alkyles linéaires ou ramifiés, les radicaux vinyle, phényle, trifluoro-3,3,3 propyle. De préférence les radicaux alkyles présentent de 1 à 6 atomes de carbone inclus. Plus particulièrement, on peut citer comme radicaux R alkyle, les radicaux méthyle, éthyle, isopropyle, tertiobutyle et n-hexyle.

Avantageusement, dans les émulsions type polyaddition, au moins une partie des radicaux R¹⁰ sont des restes vinyles (teneur pondérale en Vi notamment comprise entre 0,1 et 2 %). Ces fonctions vinylées sont portées par les motifs M, D ou T. Comme exemple, on peut citer les résines MDQ vinylées, telle que MD^{vi}Q, ou encore des résines MM^{vi} Q.

Concernant les tensioactifs (E) autre que l'hydrocolloïde protecteur (APV), ils peuvent être anioniques (sauf dans le cas où l'émulsion comprend une amine salifiée à titre de promoteur (C)), cationiques ou non ioniques, en particulier il peut s'agir d'un ou plusieurs alcools gras polyéthoxylés. De préférence, les tensioactifs (E) sont non ioniques. Le rôle du tensioactif sera notamment d'affiner la granulométrie de l'émulsion et éventuellement d'améliorer sa stabilité.

Cette émulsion peut comporter également d'autres additifs (I) de formulation tels que : un catalyseur de condensation permettant de favoriser la condensation des silanols du silane ou POS aminé salifié mais n'inhibant pas la catalyse au platine (par exemple des sels de titane, de zirconium, ou éventuellement certains sels d'étain), un bactéricide, un ou plusieurs pigments minéraux ou organiques, un ou plusieurs épaississants organiques (polyoxyde d'éthylène, gomme xanthane, hydroxyéthylcellulose, polymères acryliques ou cationiques...) ou minéraux (laponite).

Avantageusement, l'émulsion selon l'invention comprend un système de maintien du pH à des valeurs alcalines par exemple comprises entre 7 et 8. Ce système de maintien du pH peut être e.g. du bicarbonate de soude.

L'agent de fixation et de maintien du pH est, de préférence, un système tampon comprenant HC0₃⁻/CO₃²⁻ et/ou H2PO₄⁻/HPO₄²⁻. Ainsi, pour obtenir l'effet tampon souhaité, il conviendra d'introduire conformément à l'invention un sel d'HCO₃⁻ et/ou H₂PO₄⁻ comme par exemple NaHCO₃ et/ou Na₂CO₃ et/ou NaH₂PO₄ et/ou Na₂HPO₄. Il va de soi que tout autre sel à contre-anion différent (e.g. K) pourrait convenir. De manière particulièrement préférée, on met en oeuvre en pratique un système tampon constitué par du NaHCO₃ que l'on incorpore dans l'émulsion.
Cela permet la stabilisation de l'émulsion ou du bain d'enduction ou de foulardage réalisé par mélanges des émulsions. Cette disposition est décrite plus en détail dans la demande de brevet FR-A-2 773 166, dont le contenu est intégré par référence dans le présent exposé.

Eventuellement, l'émulsion peut contenir des charges minérales de renfort ou de bourrage, qui sont choisies de préférence parmi les silices de combustion et les silices de précipitation. Elles ont une surface spécifique, mesurée selon les méthodes BET, d'au moins 50 m²/g, notamment comprise entre 50 et 400 m²/g, de préférence supérieure à 70 m²/g, une dimension moyenne des particules primaires inférieure à 0,1 micromètre (µm) et une densité apparente inférieure à 200 g/litre.

Ces silices hydrophiles sont de préférence incorporées telles quelles dans la phase aqueuse (continue) de l'émulsion. Selon une variante, ces silices peuvent éventuellement être traitées par un ou des composés organosiliciques habituellement utilisés pour cet usage. Selon une autre variante, les silices peuvent être prédispersées dans l'huile silicone. Parmi ces composés, figurent les méthylpolysiloxanes tels que l'hexaméthyldisiloxane, l'octaméthylcyclo-tétrasiloxane, les méthylpolysilazanes tels que l'hexaméthyldisilazane, l'hexaméthylcyclotrisilazane, les chlorosilanes tels que le diméthyl-dichlorosilane, le triméthylchlorosilane, le méthylvinyldichlorosilane, le diméthylvinylchlorosilane, les alcoxysilanes tels que le diméthyl-diméthoxysilane, le diméthylvinyléthoxysilane, le triméthylméthoxysilane. Lors de ce traitement, les silices peuvent accroître leur poids de départ jusqu'à un taux de 20 %.

Il est également possible d'utiliser en sus ou à la place des charges siliceuses d'autres charges minérales telles que carbonates de calcium quartz broyé, argiles calcinées et terres de diatomées, éventuellement sous forme de dispersion aqueuse ("slurry").

En ce qui concerne les matières minérales non siliceuses, elles peuvent intervenir comme charge minérale semi-renforçante, de bourrage ou à propriétés spécifiques. Des exemples de ces charges non siliceuses utilisables seules ou en mélange sont le noir de carbone, le dioxyde de titane, l'oxyde d'aluminium, l'alumine hydratée, la vermiculite expansée, la vermiculite non expansée, le carbonate de calcium, l'oxyde de zinc, le mica, le talc, l'oxyde de fer, le sulfate de baryum et la chaux éteinte. Ces charges ont une granulométrie généralement comprise entre 0, 001 et 300 Mm et une surface BET inférieure à 100 m²/g.

On peut généralement utiliser de 0,5 à 60 % en poids, de préférence de 10 à 25 % en poids de charge, par rapport au poids de la phase silicone de la formule.

La composition de l'émulsion mise en oeuvre dans le cadre de l'invention est, par exemple la suivante :
◆ 100 parties en poids d'une huile POS (A) α,ω-divinylée dont la teneur en groupements vinyles est comprise entre 2 et 100 méq/100g ;
◆ 0 à 150 parties en poids d'une dispersion de charge (J) renforçante, semi-renforçante et/ou de bourrage dans l'eau , ou dans une huile POS α,ω-divinylée (à raison de 10 à 60 % de charge dans la dispersion) ;
◆ 1 à 7 parties en poids d'au moins une huile POS (B1) à SiH, telle que le rapport nombre de groupes Si-H / nombre de groupes Si-alcényle va de 0,4 à 10, de préférence de 0,6 à 5 ;
◆ 0,2 à 5 parties en poids de promoteur d'adhérence (C), pris à l'état sec ;
◆ un catalyseur de polyaddition (D), qui est composé d'au moins un métal appartenant au groupe du platine, à raison de 2 à 150 ppm de platine ;
◆ 0,5 à 10 parties en poids de tensioactif (E) ;
◆ 0 à 100 parties en poids d'une résine POS (F) ;
◆ 0 à 1 parties en poids d'un inhibiteur de réticulation (G) ;
◆ 0 à n parties en poids d'agent de fixation de pH (H), n étant tel que le pH soit maintenu entre 7 et 8 ;
◆ 0 à m parties en poids d'un additif de formulation (I) ;
◆ 0 à 150 parties en poids d'une dispersion de charge (J) renforçante, semi-renforçante et/ou de bourrage dans une huile POS α(ω)-divinylée, à raison de 10 à 80 % de charge dans la dispersion ;
◆ 40 à 2000 parties en poids d'eau (K), de manière à ce que l'émulsion finale ou le bain (réalisé par mélange de plusieurs émulsions et d'eau), servant au traitement du tissu, ait un extrait sec compris entre 5 et 65 %.

Selon un autre de ses aspects la présente invention concerne également un procédé de préparation d'une émulsion aqueuse de POS telle que définie ci-dessus, caractérisé en ce que l'on réalise une mise en émulsion par introduction dans un même réacteur des constituants (A) à (K).

Mais de préférence, l'émulsion est produite par mélange de pré-émulsions qui sont chacune inaptes à réticuler séparément du fait qu'elles ne présentent pas toutes les espèces réactives et le catalyseur nécessaire (POS =SiVi + POS =sikh + platine) pour la polyaddition. Par exemple on peut réaliser une émulsion contenant les =SiVi et les =sikh et l'inhibiteur (partie A), et une émulsion catalysante à base de platine et d'huile ≡SiVi (partie B), qui seront associées lors de la confection du bain d'enduction.

Cela facilite grandement l'obtention d'une émulsion stable et qui peut être aisément préparée dans des conditions industrielles. Il est envisageable de mettre en oeuvre des ingrédients (A) et/ou (B) et/ou (C) se présentant sous forme de pré-émulsions contenant ou non les autres ingrédients (D) à (J).

Ainsi, selon une variante :
- on réalise les pré-émulsions suivantes :
   (i) une pré-émulsion comme base du POS (A),
   (ii) une pré-émulsion comme base du POS (B) (émulsion réticulante),
   (iii) une pré-émulsion comme base du catalyseur (D) (émulsion catalysante) constitué par exemple d'une émulsion aqueuse d'un catalyseur au platine dilué dans une huile silicone vinylée;
- on mélange ces pré-émulsions, l'une ou l'autre des pré-émulsions (i) à (iii) pouvant renfermer, en outre, le tensioactif (E), éventuellement la résine POS (F), éventuellement l'inhibiteur de réticulation (G) et/ou éventuellement l'agent (H) de fixation du pH et/ou éventuellement l'additif de formulation (I).

De préférence l'émulsion catalysante est ajoutée aux autres émulsions silicones (notamment celle à base de SiH) lors de la formulation du bain, avant application sur le textile architectural.

Selon des modalités avantageuses de l'invention :
- lorsque l'on utilise le tensioactif (E) comme seul émulsifiant, la mise en émulsion se fait par voie directe ou par inversion de phase ;
- lorsqu'on utilise (en tout ou partie) un APV (C) comme seul émulsifiant, la mise en émulsion se fait par voie directe uniquement ;
la voie directe consistant à couler la phase silicone dans la solution aqueuse contenant le tensioactif.

Une autre modalité avantageuse de l'invention peut consister en l'introduction du promoteur d'adhérence (C), notamment le silane ou POS aminé salifié, uniquement lors de la préparation du bain d'enduction.

Une autre possibilité pourrait être de préparer des parties A et B d'émulsion ou des pré-émulsions (i), (ii), (iii) ne contenant pas de promoteur d'adhérence, de prévoir l'incorporation séparée de ce dernier lors du mélange de A et B ou de (i), (ii), (iii).

La présente invention a aussi pour objet l'émulsion aqueuse de POS telle que définie ci-dessus.

La présente invention vise également toute membrane silicone architecturale susceptible d'être obtenue conformément au procédé selon l'invention à partir d'un textile architectural:
→ par dépôt sur ce dernier d'au moins une couche d'une émulsion aqueuse de polyorganosiloxane (POS) réticulable en élastomère par des réactions de polyaddition, et adaptée à l'imprégnation de textiles architecturaux, et comprenant:
   (A) au moins un POS présentant par molécule au moins deux groupements fonctionnels insaturés de type alcényle en C₂-C₆, liés au silicium,
   (B) au moins un POS présentant par molécule au moins trois atomes d'hydrogène liés au silicium,
   (C) au moins un promoteur d'adhérence spécial choisi dans le groupe de composés comprenant les hydrocolloïdes protecteurs, les silanes et/ou les POS hydroxylés porteurs par molécule d'au moins un groupement hydroxyle et d'au moins une fonction aminée et salifiée, et leurs mélanges,
      avec la condition selon laquelle le pourcentage en poids du promoteur d'adhérence (C) par rapport à la phase silicone est strictement situé dans l'intervalle allant de 0,005 à 10 %, de préférence de 0,03 à 5 % et plus préférentiellement encore de 0,05 à 4 %,
   (D) au moins un catalyseur,
   (E) au moins un tensioactif,
   (F) éventuellement au moins une résine POS comportant au moins deux groupements alcényles,
   (G) éventuellement au moins un inhibiteur de réticulation,
   (H) éventuellement au moins un agent de fixation du pH,
   (I) éventuellement au moins un additif de formulation,
   (J) éventuellement une charge,
   (K) et de l'eau,
→ puis par réticulation des POS contenus dans l'émulsion déposée sur le textile architectural.

Selon une disposition avantageuse de l'invention, le textile architectural est un tissu choisi dans le groupe de matériaux comprenant des fibres et/ou des fils choisis dans le groupe de matériaux comprenant : le verre, la silice, les métaux, la céramique, le carbure de silicium, le carbone, le bore, les fibres naturelles comme le coton, la laine, le chanvre, le lin, les fibres artificielles comme la viscose, ou des fibres cellulosiques, les fibres synthétiques comme les polyesters, les polyamides, les polyacryliques, les chlorofibres, les polyoléfines, les caoutchoucs synthétiques, l'alcool polyvinylique, les aramides, les fluorofibres, les phénoliques.

De manière remarquable, son Pouvoir Calorifique Supérieur (PCS) est inférieur ou égal à 4200 kJ/kg et de préférence inférieur ou égal à 2500 kJ/kg.

Avantageusement, la membrane silicone architecturale correspondant à un textile architectural enduit tel que défini ci-dessus ou obtenu par le procédé décrit supra constitue une membrane pour l'architecture intérieure et extérieure ou la protection solaire.

Une telle membrane a, de préférence, un poids inférieur à 1200 g/m² et préférentiellement compris entre 100 et 500 g/m².

Outre ces membranes en matériaux souples destinés à être utilisés dans l'architecture textile intérieure ou extérieure (bâches, tentes, stands, chapiteaux...) ou la protection solaire.

Les tissus de verre enduits de couche mince issue de l'enduction et de la réticulation de l'émulsion selon l'invention, sont particulièrement intéressants, notamment du fait de leur bonne résistance à la déchirure et à l'effilochage. Ils sont par ailleurs souples et ne sont pas sujets au marquage à la pliure. De plus, leur Pouvoir Calorifique Supérieur est faible : PCS ≤ 4200 kJ/kg, et préférentiellement ≤ 2500 kJ/kg.

L'invention va être maintenant décrite plus en détail à l'aide d'exemples de réalisation non limitatifs.

### EXEMPLES

### Exemple 1 : Confection des émulsions mises en oeuvre dans le procédé selon l'invention

### 1.1 - Composés mis en oeuvre

- POS A-1 : huile PDMS α,ω-diméthylvinylsiloxy, de viscosité dynamique (ηdt) = 60 000 mPa.s à 23°C et contenant 0,073 % Vi en poids)
- POS A-2 : huile POS hydrogénée à motifs Me2SiO et MeHSiO de viscosité 25 mPa.s et contenant 0,7 % H en poids)
- Tensioactif (D) = soit le Rhodiasurf ROX solution aqueuse à 85 % d'un alcool gras éthoxylé commercialisé par RHODIA, soit l'APV = solution aqueuse à 10% d'alcool polyvinylique 25/140 (viscosité en solution à 4 % : 23 / indice d'ester : 140) de marque RHODOVIOL®
- Promoteur (B) d'adhérence et tensioactif (D) = APV
- Catalyseur (C) = platine de Karstedt dilué dans une huile POS vinylée, et titrant 10 % de Pt
- Résine (E.1) = solution à 40 % de résine MD^{vi}Q dans une huile PDMS α, ω diméthylvinylsiloxy de viscosité dynamique (ηdt) = 60 000 mPa.s à 23°C, la solution de résine contenant 0,7 % Vi en poids)
- (F) = ECH : Ethynylcyclohexanol.

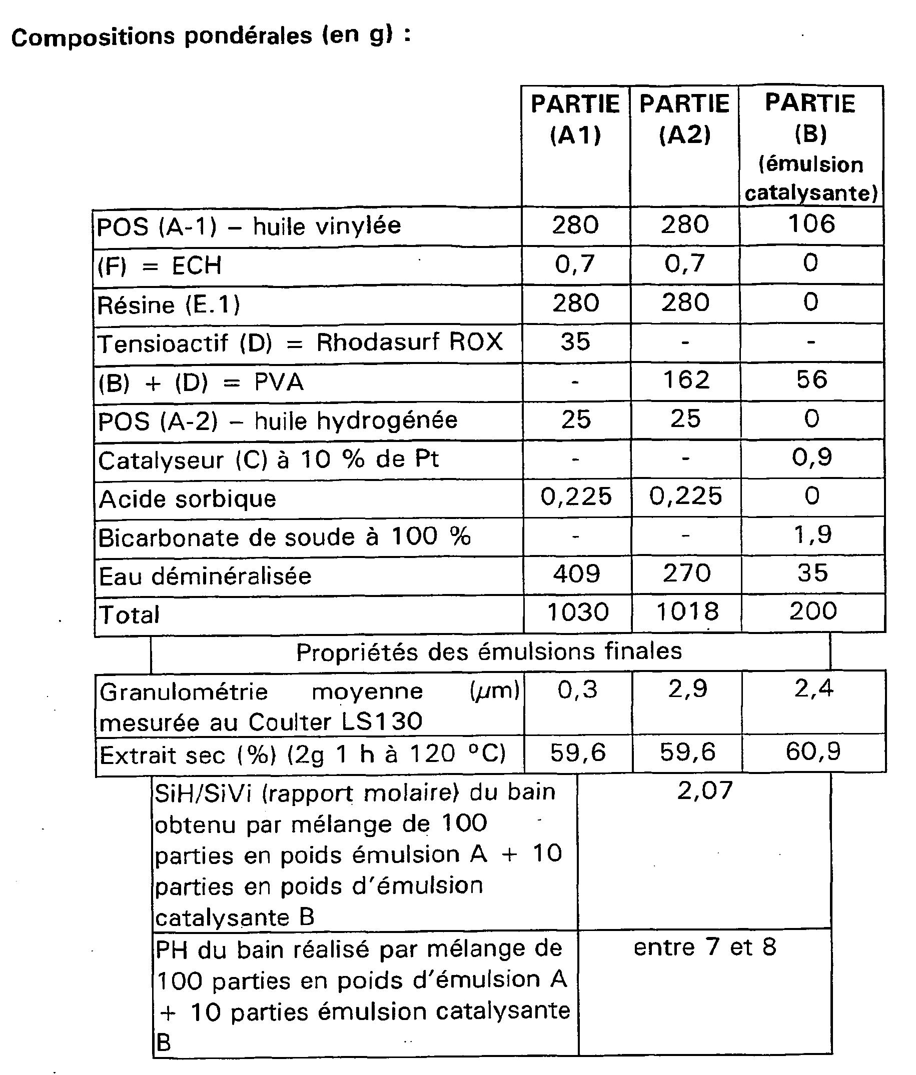

### 1.2 - Mode opératoire pour la préparation des émulsions :

### PARTIE (A1) :

Dans un réacteur IKA de laboratoire, muni d'une ancre raclante et d'un socle (refroidi par circulation d'eau froide), introduction du Rhodasurf ROX , de 35 g d'eau, et de l'huile POS (A-1) dans laquelle a été dispersé préalablement l'inhibiteur ECH . Après 15 min d'agitation à 80 trs / min on obtient une émulsion huile/eau concentrée présentant l'aspect d'un gel visqueux.

On coule alors la résine (E.1) sous agitation (80 trs/min) et pendant 85 min, la température finale étant voisine de 30°C. La granulométrie moyenne de l'émulsion est alors de 0,28 µm.

On agite encore pendant 30 min, puis on coule l'huile POS (A-2) (huile polydiméthylsiloxane hydrogénée), pendant 15 min, et 80 g d'eau.

A cette étape la granulométrie moyenne de l'émulsion caractérisée au Coulter LS130 est de 0,29 µm.

Dilution de l'émulsion par addition progressive du solde d'eau déminéralisée (soit 310 g), puis de l'acide sorbique, et l'émulsion finale est conditionnée en flacon en polyéthylène.

### PARTIE (A2) :

Dans un réacteur IKA de laboratoire, muni d'une ancre raclante et d'un socle (refroidi par circulation d'eau froide), introduction de la solution aqueuse à 10 % d'alcool polyvinylique (Rhodoviol 25/140) et de l'acide sorbique.

On coule la résine (E.1) sous agitation pendant 170 min, la température finale étant voisine de 22°C.

On coule ensuite l'huile POS (A-1) (huile polydiméthylsiloxane bloquée ViMe2SiO, de viscosité égale à 60 000 mPa.s et contenant 0,07 % Vi) dans laquelle a été prédispersée l'éthynylcyclohexanol (ECH), pendant 150 min, la température finale atteignant 17°C.

A cette étape la granulométrie moyenne de l'émulsion caractérisée au Coulter LS130 est de 5,9 µm.

On ajoute alors un Rotor-stator Ultra-Turrax (IKA) et cisaille l'émulsion pendant 1 h 30, 20 min à 16000 tours/min puis 1 h 10 à 13000 tr/min,

Tinitiale° = 22,9°C T°finale= 28,6°C.

La granulométrie moyenne baisse à 3 µm.

Coulée de l'huile POS (A-2) (huile silicone à motifs Me₂SiO_{2/2} et MeHSiO_{2/2} de viscosité 25 mPa.s et contenant 0,7 % H en poids) pendant 20 min, T=24,5°C.

Dilution de l'émulsion par addition progressive d'eau déminéralisée pendant 60 min, TO =27,3°C.

### PARTIE B :

L'émulsion B est réalisée selon le même protocole que l'émulsion A2, en coulant l'huile POS-1 621 V60000 (dans laquelle a été prédispersé le catalyseur (C)) dans la solution aqueuse à 10 % d'alcool polyvinylique. Le bicarbonate est ajouté à la fin, dans l'émulsion diluée.

### PARTIES A + B :

Le mélange de 100 parties de A1 ou A2 avec 10 parties de B, plus éventuellement de l'eau de dilution pour ajuster la viscosité et la concentration du bain (en vue de régler la quantité de silicone déposée sur le tissu) est réalisé lors de la constitution du bain d'enduction, avant application sur le tissu. Le pH du bain est compris entre 7 et 8.

### Exemple 2 : Procédé d'application des émulsions de l'exemple 1

Par foulardage (exprimage entre deux rouleaux).

Le tissu arrive verticalement entre les rouleaux où l'émulsion est déposée en continu, le tissu se trouvant imprégné sur ses deux faces en sortie des rouleaux. Ensuite le tissu passe dans un four pendant une minute.

L'installation fonctionne à 10 m/min. Les températures des fours sont réglés à 120 en entrée, puis à 160°C en sortie. La pression sur les rouleaux d'exprimage est de l'ordre de 1,5 bars.

Les tissus sont pesés avant et après enduction pour mesurer le poids déposé.

### Exemple 3 : Procédé d'application des émulsions de l'exemple 1

Cet exemple est identique à l'exemple 2, à la différence près que la pression sur les rouleaux d'exprimage est de l'ordre de 1 bar.

Les tissus sont pesés avant et après enduction pour mesurer le poids déposé.

### Exemple 4 : Procédé d'application des émulsions de l'exemple 1

Par foulardage (exprimage entre deux rouleaux).

Le tissu est immergé dans un bac placé en amont des rouleaux d'exprimage et arrive selon un angle de 20° entre les rouleaux dont la pression d'exprimage est de 1.5 bars, Ensuite le tissu passe dans un four pendant une minute.

L'installation fonctionne à 10 m/min. Les températures des fours sont réglés à 120 en entrée, puis à 160°C en sortie. Les tissus sont pesés avant et après enduction pour mesurer le poids déposé.

### Exemple 5 : Validation en application - propriétés obtenues avec le mélange d'émulsions A2 + B (sans additif)

### 5.1 Tissu de verre poids 350g/m²

Ce tissu est enduit selon le procédé de l'exemple 4 par une émulsion selon l'exemple 1 (mélange d'émulsions A2 + B (sans additif)). L'extrait sec de ce bain a été ajusté à 55,7 %, puis à 48 %.

Dans ces conditions on a déposé 22 g/m² exprimé en sec.

Le tissu enduit présente un bel aspect .

Le pouvoir calorifique supérieur mesuré selon NFP92-510 est de 1900 KJ/kg.

La tenue à l'effilochage est bonne, elle est matérialisée par une résistance au peignage mesurée selon DIN54301 supérieure à 35 N.

### 5.2 Tissu de verre poids 200 g/m²

Ce tissu est enduit selon le procédé de l'exemple 2 par une émulsion selon l'exemple 1 (mélange d'émulsions A2 + B (sans additif)). L'extrait sec de ce bain a été ajusté à 55,7 %, puis à 42 %.
Dans ces conditions on a déposé 15 g/m² exprimé en sec.

Le tissu enduit présente un bel aspect.

Le pouvoir calorifique supérieur mesuré selon NFP92-510. est de 2150 KJ/kg.

La tenue à l'effilochage est bonne, elle est matérialisée par une résistance au peignage mesurée selon DIN54301 supérieure à 35 N.

### 5.3 Tissu de verre poids 200 g/m²

Ce tissu est enduit selon le procédé de l'exemple 3 par une émulsion selon l'exemple 1 (mélange d'émulsions A2 + B (sans additif)). L'extrait sec de ce bain a été ajusté à 55,7 %, puis à 42 %.
Dans ces conditions on a déposé 12 g/m² exprimé en sec.

Le tissu enduit présente un bel aspect en particulier sur la face supérieure ayant reçu l'émulsion.

Le pouvoir calorifique supérieur mesuré selon NFP92-510 est de 1800 KJ/kg.

La tenue à l'effilochage est bonne, elle est matérialisée par une résistance au peignage mesurée selon DIN54301 supérieure à 35 N.

### Exemple 6 : Incorporation à l'émulsion A du silane aminé salifié ou d'APV lors de la confection du bain d'enduction

Des essais d'addition de promoteurs d'adhérence ont été réalisés pour rendre les émulsions davantage adhérentes sur la fibre de verre ou des fibres synthétiques. Les silanes hydrosolubles testés sont :

### 6.1 Essai comparatif :

Le promoteur est le dynasylan^{®} HS 2926 commercialisé par la société Degussa -Sivento; silane époxy, pH = 3, à 60% dans l'eau

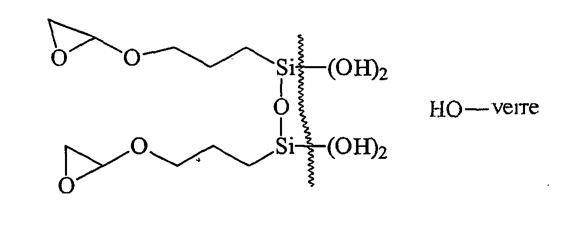

### 6.2 Essai 6.2

Le dynasylan^{®} HS 2929 commercialisé par la société Degussa - Sivento, silane aminé et acrylique condensé et salifié, pH =4, à 60% dans l'eau.

### 6.3 Essai 6.3

Le promoteur est le Silquest^{®} VS142 commercialisé par la société Witco - OSI, silane aminé, pH =12, à env. 25 % dans l'eau, qui est constitué d'un oligomère du silane décrit ci-dessous, partiellement condensé via ses SiOH.

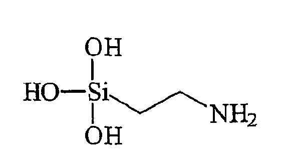

Ce silane a été utilisé après salification préalable obtenue par neutralisation de la solution aqueuse par addition d'une quantité d'acide acétique suffisante pour ramener son pH entre 6 et 7.

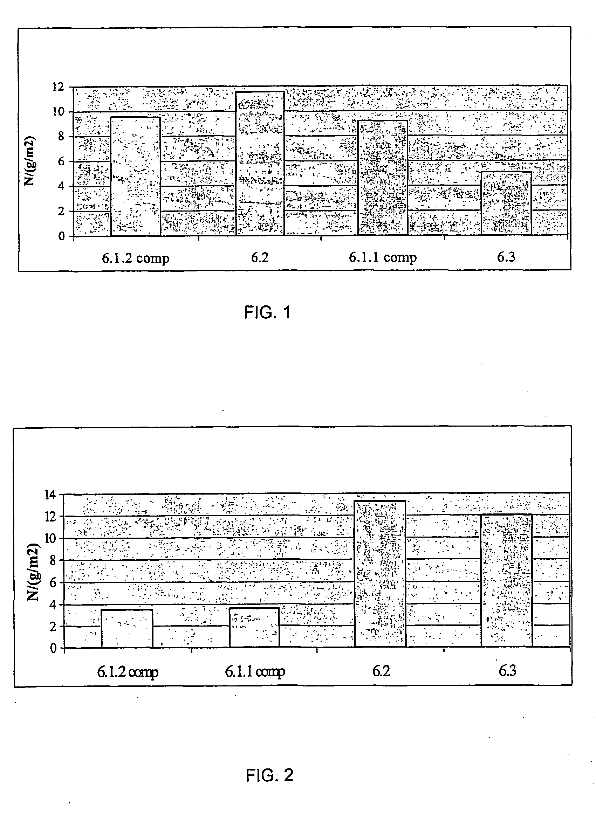

Ces promoteurs des essais 6.1, 6.2, 6.3 sont additionnés directement dans la partie A2 de l'émulsion de l'exemple 1, 24 H avant la réalisation du bain (mélange A2 + B) à un taux de 2% (en poids de silane sec par rapport à l'huile). Dès confection du bain des tests d'enduction de tissu par sérigraphie et de pelage sont réalisés avec le protocole décrit en annexe. Les résultats d'adhérence sur polyester et sur tissu de verre type toile, exprimés par la force de pelage (mesurée en N/(g/m²), selon un test de pelage à 180°décrit ci-après) sont représentés sur les figures 1 et 2 annexées.
La **Figure 1** correspond à un textile en tissu polyester.
La **Figure 2** correspond à un textile en tissu de verre.
Nota : dans les 2 figures, le témoin correspond aux résultats d'adhérence obtenus lorsque le tissu est traité avec l'émulsion préparée comme décrit au § 1.2 de l'exemple 1, sans ajout de promoteur d'adhérence supplémentaire.

On remarque que les silanes aminés et salifiés améliorent nettement l'adhérence sur tissu de verre. Le silane aminé et salifié 6.2 améliore aussi l'adhérence sur tissu en polyester.

Le test du pelage à 180° sur support fibreux est une mesure de l'adhérence d'émulsions de PA. La procédure de ce test est la suivante :

### 1. Principe

Mesure de la force nécessaire pour décoller 2 bandes de supports enduits du mélange à tester et réticulées sur les textiles architecturaux.

### 2. Réactifs

Utilisation de Bleu de Méthylène pour faciliter le repérage de la superposition des 2 lamelles de tissu enduites (non indispensable à la mesure).

### 3. Appareillage

- 1 presse chauffante : fixer la température des plateaux à 120°C.
- 2 étuves : une à 80°C et une à 160°C.
- installation pour application par mode sérigraphique (utilisation d'une toile de mailles de diamètre∼200µm).
- 1 Balance.
- 1 Dynamomètre LHOMARGY® DY 30.

### 4. Mode opératoire

### a- Préparation des éprouvettes

### * Tissu support utilisé :

Découpe de bandes de ∼12 sur 17 cm dans le textile architectural. Pour faciliter cette découpe et éviter l'effilochage, on enduit les contours tracés sur le tissu, d'un élastomère silicone réticulant rapidement à froid (CAF). Donc à l'aide d'un pistolet on dépose des petites quantités de CAF que l'on étale à l'aide d'une spatule le long des contours. Une fois le CAF sec, le découpage sera plus facile.

### * Préparation du mélange :

10 g de partie B pour 100 g de partie A. Il faut ∼20 g de mélange pour préparer 3 essais. On ajoute 1 goutte de bleu de méthylène pour faciliter la superposition des 2 faces enduites.

### b- Application

Par mode sérigraphique, on dépose 2 bandes de 10 cm sur 5 du mélange, parallèlement et à une distance de ∼ 2 cm. Le morceau de textile est pesé avant et après enduction pour connaître la quantité déposée.

### * Séchage et réticulation sous presse:

- 5 min à 80°C
- superposition des 2 faces enduites l'une sur l'autre
- 5 min sous presse à 120°C (déposer entre 2 feuilles de papier), à ∼ 2 Tonnes
- 5 min à 160°C
laisser reposer à T° ambiante pendant ∼½ journée.

### 6.4 Essais d'application avec mélanges partie A1 + B, A1 + B + VS142 salifié, A1 + B + APV :

Ces imprégnations sont réalisées sur support tissu de verre (200 g/m²) par foulardage selon l'exemple 3. Les échantillons sont passés en étuve à 150°C pendant 2 min. Les poids déposés sont comparables et représentatifs.

Les tests de résistance au peignage sont réalisés afin de déterminer l'aptitude des échantillons à résister à l'effilochage.

| **Partie** | **Poids déposé** | **Résistance au peignage (DIN 54301)** |
|---|---|---|
| A1 + B | 18-20 | 11 |
| A1 + B + VS 142 salifié | 18 | 44 |
| A1 + B + 1.8 % APV | 19-20 | 24 |
| A1 + B + 3.6 % APV | 17 | 14 |
| A1 + B + 5.4% APV | 16- 19 | 16 |

Il a pu être observé que la meilleure résistance à l'effilochage matérialisée par le test de peignage est obtenue grâce à la composition A1 + B + VS 142 (présence du silane aminé salifié).

## Revendications

1. Procédé de réalisation de membranes silicones architecturales par revêtement d'un textile architectural avec au moins une couche d'élastomère silicone, **caractérisé en ce qu'**il comprend les étapes suivantes :
• une étape de dépôt sur ledit textile architectural, d'au moins une couche d'une émulsion aqueuse de polyorganosiloxane (POS) réticulable en élastomère par des réactions de polyaddition et comprenant:
(A) au moins un POS présentant par molécule au moins deux groupements fonctionnels insaturés de type alcényle en C₂-C₆, liés au silicium,
(B) au moins un POS présentant par molécule au moins trois atomes d'hydrogène liés au silicium,
(C) au moins un promoteur d'adhérence spécial choisi dans le groupe de composés comprenant les hydrocolloïdes protecteurs, les silanes porteurs par molécule d'au moins un groupement hydroxyle et d'au moins une fonction aminée et salifiée et les POS hydroxylés porteurs par molécule d'au moins un groupement hydroxyle et d'au moins une fonction aminée et salifiée, et leurs mélanges,
avec la condition selon laquelle le pourcentage en poids du promoteur d'adhérence (C) par rapport à la phase silicone est strictement situé dans l'intervalle allant de 0,005 à 10 %, de préférence de 0,03 à 5 % et plus préférentiellement encore de 0,05 à 4 %,
(D) au moins un catalyseur,
(E) au moins un tensioactif,
(F) éventuellement au moins une résine POS non hydroxylée ayant par molécule, au moins deux motifs différents choisis parmi les motifs R¹⁰₃SiO_{1/2} (motif M), R¹⁰₂SiO_{2/2} (motif D), R¹⁰SiO_{3/2} (motif T) et SiO_{4/2} (motif Q), les radicaux R¹⁰ étant identiques ou différents et étant choisis parmi les radicaux alkyles linéaires ou ramifiés, les radicaux vinyle, phényle, trifluoro-3,3,3 propyle et ladite résine POS comportant au moins deux groupements alcényles,
(G) au moins un inhibiteur de réticulation,
(H) éventuellement au moins un agent de fixation du pH,
(I) éventuellement au moins un additif de formulation,
(J) éventuellement une charge,
(K) et de l'eau,
• puis une étape de réticulation, de manière à obtenir un textile architectural revêtu d'une couche d'élastomère, de telle sorte que le rapport du poids de l'enduction exprimée en sec au poids du textile architectural soit inférieur à 0,2 et de préférence compris entre 0,05 et 0,11.

2. Procédé selon la revendication 1, **caractérisé en ce que** l'étape de dépôt est une étape d'enduction.

3. Procédé selon la revendication 2, **caractérisé en ce que** l'enduction est réalisée par racle, en particulier par racle sur cylindre, racle en l'air et racle sur tapis, par foulardage, notamment par exprimage entre deux rouleaux ou encore par rouleau lécheur, cadre rotatif, rouleau inverse "reverse roll", par transfert, par sérigraphie, par héliographie, ou par pulvérisation.

4. Procédé selon l'une quelconque des revendications 1 à 3, **caractérisé en ce que** le textile architectural comprend des fibres et/ou des fils choisis dans le groupe de matériaux comprenant : le verre, la silice, les métaux, la céramique, le carbure de silicium, le carbone, le bore, les fibres naturelles comme le coton, la laine, le chanvre, le lin, les fibres artificielles comme la viscose, ou des fibres cellulosiques, les fibres synthétiques comme les polyesters, les polyamides, les polyacryliques, les chlorofibres, les polyoléfines, les caoutchoucs synthétiques, l'alcool polyvinylique, les aramides, les fluorofibres, les phénoliques.

5. Procédé selon l'une quelconque des revendications 1 à 4, **caractérisé en ce que** le textile architectural lorsqu'il est choisi parmi les matériaux inorganiques possède, une fois revêtu, un Pouvoir Calorifique Supérieur (PCS), mesuré selon NFP92-510, inférieur ou égal à 4200 KJ/Kg.

6. Textile architectural ou membrane silicone architecturale obtenue à partir d'un textile architectural:
→ par dépôt sur ce dernier d'au moins une couche d'une émulsion aqueuse de polyorganosiloxane (POS) réticulable en élastomère par des réactions de polyaddition, et adaptée à l'imprégnation de textiles architecturaux, et comprenant:
(A) au moins un POS présentant par molécule au moins deux groupements fonctionnels insaturés de type alcényle en C₂-C₆, liés au silicium,
(B) au moins un POS présentant par molécule au moins trois atomes d'hydrogène liés au silicium,
(C) au moins un promoteur d'adhérence spécial choisi dans le groupe de composés comprenant les hydrocolloïdes protecteurs, les silanes porteurs par molécule d'au moins un groupement hydroxyle et d'au moins une fonction aminée et salifiée et les POS hydroxylés porteurs par molécule d'au moins un groupement hydroxyle et d'au moins une fonction aminée et salifiée, et leurs mélanges,
avec la condition selon laquelle le pourcentage en poids du promoteur d'adhérence (C) par rapport à la phase silicone est strictement situé dans l'intervalle allant de 0,005 à 10 %, de préférence de 0,03 à 5 % et plus préférentiellement encore de 0,05 à 4 %,
(D) au moins un catalyseur,
(E) au moins un tensioactif,
(F) éventuellement au moins une résine POS non hydroxylée ayant par molécule, au moins deux motifs différents choisis parmi les motifs R¹⁰₃Si0_{1/2} (motif M), R¹⁰₂Si0_{2/2} (motif D), R¹⁰Si0_{3/2} (motif T) et Si0_{4/2} (motif Q), les radicaux R¹⁰ étant identiques ou différents et étant choisis parmi les radicaux alkyles linéaires ou ramifiés, les radicaux vinyle, phényle, trifluoro-3,3,3 propyle et ladite résine POS comportant au moins deux groupements alcényles,
(G) éventuellement au moins un inhibiteur de réticulation,
(H) éventuellement au moins un agent de fixation du pH,
(I) éventuellement au moins un additif de formulation,
(J) éventuellement une charge,
(K) et de l'eau,
→ puis par réticulation des POS contenus dans l'émulsion déposée sur le textile.

7. Membrane selon la revendication 6, **caractérisée en ce qu'**elle est constituée par un textile comprenant des fibres et/ou des fils choisis dans le groupe de matériaux comprenant : le verre, la silice, les métaux, la céramique, le carbure de silicium, le carbone, le bore, les fibres naturelles comme le coton, la laine ,le chanvre, le lin, les fibres artificielles comme la viscose, ou des fibres cellulosiques, les fibres synthétiques comme les polyesters, les polyamides, les polyacryliques, les chlorofibres, les polyoléfines, les caoutchoucs synthétiques, l'alcool polyvinylique, les aramides, les fluorofibres, les phénoliques.

8. Membrane selon la revendication 6 ou 7, **caractérisée en ce que** son Pouvoir Calorifique Supérieur (PCS), mesuré selon NFP92-510, est inférieur ou égal à 4200 kJ/kg et de préférence inférieur ou égal à 2500 kJ/kg.

9. Membrane selon l'une des revendications 6 à 8 ou obtenue par le procédé selon l'une des revendications 1 à 5, **caractérisée en ce qu'**elle est destinée à l'architecture intérieure et extérieure ou la protection solaire.

10. Membrane selon la revendication 9, **caractérisée en ce qu'**elle présente un poids inférieur à 1200 g/m² et de préférence compris entre 100 et 500 g/m².

## Claims

1. A process for preparing architectural silicone membranes by coating an architectural textile with at least one silicone elastomer layer, **characterized in that** it comprises the following stages:
• a stage of deposition, on said architectural textile, of at least one layer of an aqueous polyorganosiloxane (POS) emulsion which can be crosslinked to give an elastomer by polyaddition reactions, which emulsion comprises:
(A) at least one POS exhibiting, per molecule, at least two unsaturated functional groups of C₂-C₆ alkenyl type bonded to silicon,
(B) at least one POS exhibiting, per molecule, at least three hydrogen atoms bonded to silicon,
(C) at least one special adhesion promoter chosen from the group of compounds consisting of protective hydrocolloids, silanes carrying, per molecule, at least one hydroxyl group and at least one aminated and salified functional group, and the hydroxylated POSs carrying, per molecule, at least one hydroxyl group and at least one aminated and salified functional group, and their mixtures,
with the condition according to which the percentage by weight of the adhesion promoter (C) with respect to the silicone phase is strictly within the range from 0.005 to 10%, preferably from 0.03 to 5% and more preferably still from 0.05 to 4%,
(D) at least one catalyst,
(E) at least one surfactant,
(F) optionally at least one POS resin at least one non-hydroxylated silicone resin (F) having, per molecule, at least two different units chosen from those of formulae R¹⁰₃SiO_{1/2} (unit M), R¹⁰₂SiO_{2/2} (unit D), R¹⁰SiO_{3/2} (unit T) and SiO_{4/2} (unit Q), the R radicals being identical or different and being chosen from linear or branched alkyl, vinyl, phenyl or 3,3,3-trifluoropropyl radicals, and said resin comprising at least two alkenyl groups,
(G) at least one crosslinking inhibitor,
(H) optionally at least one pH regulating agent,
(I) optionally at least one formulation additive,
(J) optionally a filler,
(K) and water,
• and then a crosslinking stage, so as to obtain an architectural textile coated with an elastomer layer, so that the ratio of the weight of the coating, expressed on a dry basis, to the weight of the architectural textile is less than 0.2 and preferably between 0.05 and 0.11.

2. The process as claimed in claim 1, **characterized in that** the deposition stage is a coating stage.

3. The process as claimed in claim 2, **characterized in that** the coating is carried out by knife, in particular by knife over roll, floating knife and knife over carpet, by padding, in particular by squeezing between two rolls, or also by licking roll, rotary machine, reverse roll, by transfer, by screen printing, by heliography or by spraying.

4. The process as claimed in any one of claims 1 to 3, **characterized in that** the architectural textile comprises fibers and/or yarns chosen from the group of materials consisting of: glass, silica, metals, ceramic, silicon carbide, carbon, boron, natural fibers, such as cotton, wool, hemp or flax, artificial fibers, such as viscose, or cellulose fibers, synthetic fibers, such as polyesters, polyamides, polyacrylics, chlorofibers, polyolefins, synthetic rubbers, poly(vinyl alcohol), aramids, fluorofibers and phenolics.

5. The process as claimed in any one of claims 1 to 4, **characterized in that** the architectural textile, when it is chosen from inorganic materials, has, once coated, a Gross Calorific Value (GCV), measured according to NFP 92510, of less than or equal to 4200 kJ/kg.

6. An architectural textile or architectural silicone membrane obtained from an architectural textile:
→ by deposition on the latter of at least one layer of an aqueous polyorganosiloxane (POS) emulsion which can be crosslinked to give an elastomer by polyaddition reactions and which is suitable for the impregnation of architectural textiles and which comprises:
(A)at least one POS exhibiting, per molecule, at least two unsaturated functional groups of C₂-C₆ alkenyl type bonded to silicon,
(B) at least one POS exhibiting, per molecule, at least three hydrogen atoms bonded to silicon,
(C) at least one special adhesion promoter chosen from the group of compounds consisting of protective hydrocolloids, hydroxylated silanes and/or POSs carrying, per molecule, at least one hydroxyl group and at least one aminated and salified functional group, and their mixtures,
with the condition according to which the percentage by weight of the adhesion promoter (C) with respect to the silicone phase is strictly within the range from 0.005 to 10%, preferably from 0.03 to 5% and more preferably still from 0.05 to 4%,
(D) at least one catalyst,
(E) at least one surfactant,
(F) optionally at least one POS resin comprising at least two alkenyl groups,
(G) optionally at least one crosslinking inhibitor,
(H) optionally at least one pH regulating agent,
(I) optionally at least one formulation additive,
(J) optionally a filler,
(K) and water,
→ and then by crosslinking the POSs present in the emulsion deposited on the textile.

7. The membrane as claimed in claim 6, **characterized in that** it is composed of a textile comprising fibers and/or yarns chosen from the group of materials consisting of: glass, silica, metals, ceramic, silicon carbide, carbon, boron, natural fibers, such as cotton, wool, hemp or flax, artificial fibers, such as viscose, or cellulose fibers, synthetic fibers, such as polyesters, polyamides, polyacrylics, chlorofibers, polyolefins, synthetic rubbers, poly(vinyl alcohol), aramids, fluorofibers and phenolics.

8. The membrane as claimed in claim 6 or 7, **characterized in that** its Gross Calorific Value (GCV), measured according to NFP 92510, is less than or equal to 4200 kJ/kg and preferably less than or equal to 2500 kJ/kg.

9. The membrane as claimed in one of claims 6 to 8 or obtained by the process as claimed in one of claims 1 to 5, **characterized in that** it is intended for interior and exterior architecture or solar protection.

10. The membrane as claimed in claim 9, **characterized in that** it exhibits a weight of less than 1200 g/m² and preferably of between 100 and 500 g/m².

## Patentansprüche

1. Verfahren zur Herstellung von Bau-Silikonmembranen durch Beschichtung eines Bautextils mit mindestens einer Schicht eines Silikonelastomers, **dadurch gekennzeichnet, dass** es die folgenden Schritte umfasst:
• einen Schritt des Aufbringens auf dem Bautextil von mindestens einer Schicht einer wässrigen Polyorganosiloxan- (POS) Emulsion, die durch Polyadditionsreaktionen zu einem Elastomer vernetzt werden kann, und umfassend:
(A) mindestens ein POS, das pro Molekül mindestens zwei ungesättigte funktionelle Gruppen vom C₂-C₆-Alkenyltyp, an Silicium gebunden, aufweist,
(B) mindestens ein POS, das pro Molekül mindestens drei Wasserstoffatome, an Silicium gebunden, aufweist,
(C) mindestens einen speziellen Haftvermittler, der aus der Gruppe von Verbindungen, die Schutzhydrokolloide, Silane, die pro Molekül mindestens eine Hydroxylgruppe und mindestens eine aminierte und in ein Salz überführte Funktion tragen, und hydroxylierte POS, die pro Molekül mindestens eine Hydroxylgruppe und mindestens eine aminierte und in ein Salz überführte Funktion tragen, und ihre Mischungen umfasst, ausgewählt ist,
unter der Bedingung, dass der Gewichtsprozentsatz des Haftvermittlers (C) in Bezug auf die Silikonphase genau im Bereich von 0,005 bis 10%, bevorzugt von 0,03 bis 5% und noch stärker bevorzugt von 0,05 bis 4% ist,
(D) mindestens einen Katalysator,
(E) mindestens ein Tensid,
(F) gegebenenfalls mindestens ein nicht hydroxyliertes POS-Harz, das pro Molekül mindestens zwei verschiedene Motive aufweist, die aus den Motiven R¹⁰₃SiO_{1/2} (Motiv M), R¹⁰₂SiO_{2/2} (Motiv D), R¹⁰SiO_{3/2} (Motiv T) und SiO_{4/2} (Motiv Q) ausgewählt sind, wobei die Radikale R¹⁰ identisch oder verschieden sind und aus linearen oder verzweigten Alkylradikalen, Radikalen von Vinyl, Phenyl, 3,3,3-Trifluor-propyl ausgewählt sind und wobei das POS-Harz mindestens zwei Alkenylgruppen umfasst,
(G)mindestens einen Vernetzungsinhibitor,
(H)gegebenenfalls mindestens einen pH-Regulator,
(I) gegebenenfalls mindestens ein Formulierungsadditiv,
(J) gegebenenfalls einen Füllstoff,
(K) und Wasser,
• und dann einen Schritt der Vernetzung, um ein Bautextil zu erhalten, das mit einer Elastomerschicht beschichtet ist, so dass das Verhältnis des Gewichts der Beschichtung, ausgedrückt als Trockengewicht, zum Gewicht des Bautextils kleiner als 0,2 und bevorzugt zwischen 0,05 und 0,11 ist.

2. Verfahren nach Anspruch 1, **dadurch gekennzeichnet, dass** der Schritt der Ablagerung ein Beschichtungsschritt ist.

3. Verfahren nach Anspruch 2, **dadurch gekennzeichnet, dass** die Beschichtung mit einer Rakel, insbesondere mit einer Zylinderrakel, Luftrakel und Teppichrakel, durch Auffüllen, insbesondere durch Pressen zwischen zwei Walzen oder auch durch eine Leckwalze, Rotationsmaschine, Gegenwalze "Reverse Roll", durch Übertragung, durch Siebdruck, durch Lichtdruck oder durch Besprühen durchgeführt wird.

4. Verfahren nach einem der Ansprüche 1 bis 3, **dadurch gekennzeichnet, dass** das Bautextil Fasern und/oder Garne umfasst, die aus der Gruppe von Materialien, umfassend: Glas, Siliciumdioxid, Metalle, Keramik, Siliciumcarbid, Kohlenstoff, Bor, Naturfasern, wie Baumwolle, Wolle, Hanf, Flachs, künstliche Fasern, wie Viskose oder Zellulosefasern, synthetische Fasern, wie Polyester, Polyamide, Polyacryle, Chlorfasern, Polyolefine, synthetische Kautschuke, Polyvinylalkohol, Aramide, Fluorfasern, Phenole ausgewählt sind.

5. Verfahren nach einem der Ansprüche 1 bis 4, **dadurch gekennzeichnet, dass** das Bautextil, wenn es aus anorganischen Materialien ausgewählt ist, sobald es beschichtet ist, einen oberen Heizwert Hₒ ("Pouvoir Calorifique Superieur", PCS), gemessen gemäß NFP92-510, von kleiner als oder gleich 4200 kJ/kg besitzt.

6. Bautextil oder Bau-Silikonmembran, erhalten aus einem Bautextil:
• durch Aufbringen auf letzterem von mindestens einer Schicht einer wässrigen Polyorganosiloxan- (POS) Emulsion, die durch Polyadditionsreaktionen zu einem Elastomer vernetzt werden kann, und die für die Imprägnierung von Bautextilien angepasst ist, und umfassend:
(A) mindestens ein POS, das pro Molekül mindestens zwei ungesättigte funktionelle Gruppen vom C₂-C₆-Alkenyltyp, an Silicium gebunden, aufweist,
(B) mindestens ein POS, das pro Molekül mindestens drei Wasserstoffatome, an Silicium gebunden, aufweist,
(C) mindestens einen speziellen Haftvermittler, der aus der Gruppe von Verbindungen, die Schutzhydrokolloide, Silane, die pro Molekül mindestens eine Hydroxylgruppe und mindestens eine aminierte und in ein Salz überführte Funktion tragen, und hydroxylierte POS, die pro Molekül mindestens eine Hydroxylgruppe und mindestens eine aminierte und in ein Salz überführte Funktion tragen, und ihre Mischungen umfasst, ausgewählt ist,
unter der Bedingung, dass der Gewichtsprozentsatz des Haftvermittlers (C) in Bezug auf die Silikonphase genau im Bereich von 0,005 bis 10%, bevorzugt von 0,03 bis 5% und noch stärker bevorzugt von 0,05 bis 4% ist,
(D) mindestens einen Katalysator,
(E) mindestens ein Tensid,
(F) gegebenenfalls mindestens ein nicht hydroxyliertes POS-Harz, das pro Molekül mindestens zwei verschiedene Motive aufweist, die aus den Motiven R¹⁰₃SiO_{1/2} (Motiv M), R¹⁰₂SiO_{2/2} (Motiv D), R¹⁰SiO_{3/2} (Motiv T) und SiO_{4/2} (Motiv Q) ausgewählt sind, wobei die Radikale R¹⁰ identisch oder verschieden sind und aus linearen oder verzweigten Alkylradikalen, Radikalen von Vinyl, Phenyl, 3,3,3-Trifluor-propyl ausgewählt sind und wobei das POS-Harz mindestens zwei Alkenylgruppen umfasst,
(G)gegebenenfalls mindestens einen Vernetzungsinhibitor,
(H) gegebenenfalls mindestens einen pH-Regulator,
(I) gegebenenfalls mindestens ein Formulierungsadditiv,
(J) gegebenenfalls einen Füllstoff,
(K) und Wasser,
• dann durch Vernetzung der POS, die in der Emulsion enthalten sind, die auf das Textil aufgebracht ist.

7. Membran nach Anspruch 6, **dadurch gekennzeichnet, dass** sie aus einem Textil aufgebaut ist, das Fasern und/oder Garne umfasst, die aus der Gruppe von Materialien, umfassend: Glas, Siliciumdioxid, Metalle, Keramik, Siliciumcarbid, Kohlenstoff, Bor, Naturfasern, wie Baumwolle, Wolle, Hanf, Flachs, künstliche Fasern, wie Viskose oder Zellulosefasern, synthetische Fasern, wie Polyester, Polyamide, Polyacryle, Chlorfasern, Polyolefine, synthetische Kautschuke, Polyvinylalkohol, Aramide, Fluorfasern, Phenole ausgewählt sind.

8. Membran nach Anspruch 6 oder 7, **dadurch gekennzeichnet, dass** ihr oberer Heizwert Hₒ ("Pouvoir Calorifique Superieur", PCS), gemessen gemäß NFP92-510, kleiner als oder gleich 4200 kJ/kg und bevorzugt kleiner als oder gleich 2500 kJ/kg ist.

9. Membran nach einem der Ansprüche 6 bis 8 oder erhalten durch das Verfahren nach einem der Ansprüche 1 bis 5, **dadurch gekennzeichnet, dass** sie für die Innen- und Außenarchitektur oder für den Sonnenschutz bestimmt ist.

10. Membran nach Anspruch 9, **dadurch gekennzeichnet, dass** sie ein Gewicht von kleiner als 1200 g/m² und bevorzugt zwischen 100 und 500 g/m² aufweist.
